# EUROPEAN PATENT APPLICATION

(11) **EP 4 844 301 A1**
(43) Date of publication of application: **25.11.2026**
(21) Application number: 25177750.4
(22) Date of filing: 20.05.2025
(51) Int. Cl.: F24S 23/70, F24S 80/50

(54) **A SOLAR THERMAL COLLECTOR MODULE**

(71) Applicant: ETH Zurich, 8092 Zurich (CH)
(72) Inventor: STEINFELD, Aldo, 5200 Brugg (CH); HAUETER, Philipp, 5022 Rombach (CH); COOPER, Thomas, Singhampton, M6S 2A5 (CA); THOMMEN, Luca, 8882 Unterterzen (CH)

(57) **Abstract**

The invention relates to a solar thermal collector module (1) comprising a frontside (F) and a backside (B) opposite the frontside, wherein the solar thermal collector module (1) comprises collection units (10) arranged next to each other, wherein each collection unit (10) comprises the following components:
- An absorber portion (11),
- A concentrator portion (12) arranged on a side of the absorber portion (11) that faces to the frontside (F),
- A back portion (13) arranged on a side of the absorber portion (11) facing to the backside (B),
- A heat transfer portion (14) for transporting a heat transfer medium, wherein the heat transfer portion (14) is arranged between the absorber portion (11) and the back portion (B), wherein the concentrator portion (12) comprises two or more concentrator elements (20), wherein the two or more concentrator elements (20) protrude from the absorber portion (11) toward the frontside (F), wherein each concentrator element (20) comprises a reflective surface (21) that is shaped to reflect incident light (100) from the frontside (F) toward the absorber portion (11), to concentrate incident light (100) onto the absorber portion (11).

## Description

The invention relates to a solar thermal collector module according to claim 1 and a method for manufacturing such a module.

The decarbonization of industrial process heat (IPH) constitutes an important step towards the transition to a sustainable future energy infrastructure. The importance of IPH is underscored by the fact that industry is the largest energy sector, comprising 55% of global energy use in 2020, and heat is the largest energy end use, comprising almost 50% of all total final energy consumption. The impact of decarbonizing industrial process heat will be immense, considering that this sector currently relies almost entirely on fossil fuels. Industrial process heat can be categorized into four temperature regimes, as given in the following table:

| **Temperature regime** | **Temperature range** |
|---|---|
| Low | Below 150°C |
| Medium | 150°C to 400°C |
| High | 400°C to 1000°C |
| Ultra-High | Above 1000°C |

Of these, the low and medium temperature regime comprise the largest share of overall energy use. With the advent of heat-intensive sustainable technologies including carbon dioxide removal via direct air capture (DAC), the need for new approaches to provide carbon-neutral solutions to low-to-medium temperature IPH is even more critical.

Solar thermal (ST) technology and the use of solar thermal collector modules, and in particular, flat plate solar thermal collectors, provide a promising pathway to produce carbon-neutral renewable heat.

A challenge with ST technology, is that the current collector technology is costly compared to heat from fossil fuels. Therefore, a next generation of solar thermal collectors for the low-temperature regime should be available with an installed cost that renders solar heat competitive vis-à-vis heat from fossil fuels.

An object of the present invention is to provide a solar thermal collector module for the low-temperature regime that is cost-efficient and effective.

This objective is achieved by a solar thermal collector module according to claim 1.

Advantageous embodiments are described in the dependent claims.

According to a first aspect of the invention, a solar thermal collector module, STC, particularly a non-evacuated solar thermal collector module, particularly a flat plate solar thermal collector module, comprises a frontside and a backside opposite the frontside, wherein the solar thermal collector module comprises collection units for light collection, particularly for collection of solar radiation, arranged next to each other, wherein each collection unit comprises the following components :
- An absorber portion,
- A concentrator portion arranged on a side of the absorber portion that faces to the frontside,
- A back portion arranged on a side of the absorber portion facing to the backside,
- A heat transfer portion for transporting a heat transfer medium, wherein the heat transfer portion is arranged between the absorber portion and the back portion.

The invention is characterized in that the concentrator portion comprises two or more concentrator elements, wherein the two or more concentrator elements protrude from the absorber portion toward the frontside, wherein each concentrator element comprises a reflective surface that is shaped to reflect incident light, particularly sunlight from the frontside toward the absorber portion, particularly to concentrate incident light onto the absorber portion.

The solar thermal collector module may be connected with other solar thermal collector modules according to the invention to form a system.

In contrast to solar thermal collectors in the art, this solar thermal collector module according to the invention advantageously combines the simple design of solar non-evacuated solar thermal collector modules comprising absorber portions, heat transfer portions and back portions, with the concentrator portion that allows concentrating incident light to a smaller area, which in turn allows generating higher temperatures of a heat transfer medium arranged in the heat transfer portion.

The term frontside particularly refers to a side of the solar thermal collector module that during operation faces toward the incident sunlight, wherein the backside faces in the opposite direction.

The absorber portion is configured to absorb incident solar radiation and convert it into heat.

The absorber portion may be formed as an absorber plate. Typically, the absorber portion is made of a material with high thermal conductivity and may be coated with a spectrally selective surface to maximize solar energy absorption in the visible and near infrared spectral range, e.g. between 0.3 µm to 2.5 µm, while minimizing thermal radiation losses in the mid infrared range, e.g. ranging from 2.5 µm to 20 µm.

The heat transfer portion is configured to transport a heat transfer medium and facilitates heat transfer from the absorber portion to the heat transfer medium. In particular, the heat transfer portion may comprise or form channels. The formation of channels may be achieved in conjunction with the absorber portion, so that the absorber portion is in direct contact with the heat transfer medium.

The expression concentrator element in the context of the current specification may be understood as a component designed to focus or direct incoming solar irradiation onto a smaller, targeted area or surface. In the context of solar thermal collector module, it typically refers to a reflective structure, having a funnel-like cross-section that concentrates solar radiation onto the absorber portion to enhance energy collection efficiency, by reducing the exposed area from which heat losses may occur, while simultaneously increasing a heat flux.

The solar thermal collector module may be arranged in a tilted fashion with respect to a horizontal plane, or may be arranged parallel to the horizontal plane.

The concentrator portion serves as an optical concentrator.

According to another embodiment of the invention, the concentrator portion comprising the reflective concentrator elements is located entirely on the side of the absorber portion that faces the frontside, wherein the heat transfer portion may be arranged entirely on the side of the absorber portion facing away from the frontside.

For this reason, the term portion in the context of the absorber portion, the concentrator portion, the heat transfer portion as well as the back portion may be referred to by the term layer, in the context of the current specification.

According to another embodiment of the invention, the solar thermal module is configured as non-tracking device. Particularly, the shape of the reflective concentrator elements is configured for a selected latitude at which the solar thermal collector module is to be operating. This shape configuration enables the reflection of the incident sunlight toward the absorber portion during most of the day for the selected latitude.

According to another embodiment of the invention, the concentrator elements have a prismatic cross-section.

According to another embodiment of the invention, the concentrator elements have a parabolic cross-section.

According to another embodiment of the invention, the concentrator elements have a parabolic cross-section that ends in a flat section at the end closest to the backside, providing the concentrator elements with the shape of a so-called "theta-in/theta-out" transformer.

According to another embodiment of the invention, the concentrator elements are shaped to form a compound parabolic concentrator (CPC).

Particularly, a reflective material on the concentrator elements comprises a solar reflectance of at least 85%.

According to another embodiment of the invention, for each collection unit the concentrator elements form a frontside aperture on a side facing the frontside, and a backside aperture on a side facing the absorber portion, wherein the backside apertures are smaller than the frontside apertures.

By configuring the concentrator elements of each collection unit to form a frontside aperture and a backside aperture, where the backside aperture is smaller than the frontside aperture, the module achieves a concentration of solar radiation. This arrangement ensures that incident sunlight entering through the larger frontside aperture is funneled and concentrated onto the absorber portion through the smaller backside aperture. This concentration mechanism increases the energy density of solar radiation on the absorber portion, thereby increasing a generated temperature at the absorber portion, or increasing the heat output at a certain absorber temperature. Additionally, the apertures allow for minimal attenuation of incoming sunlight, ensuring high optical efficiency.

The term smaller with respect to the backside aperture in comparison to the frontside aperture particularly refers to an area delimited by the aperture, that is, particularly the backside aperture encloses a smaller area than the frontside aperture.

According to another embodiment of the invention, the area of the backside aperture is at least 1.2 to 5 times smaller than the area of the frontside aperture.

According to this embodiment, the frontside aperture is selected to be a transparent aperture. It may be a clear and/or open aperture.

Similarly, the backside aperture is selected to be a transparent, open and/or clear aperture.

Particularly, the absorber portion is arranged proximate to the backside aperture of each collection unit, such that collected and concentrated solar radiation is absorbed by the absorber portion at the backside aperture.

According to another embodiment of the invention, each collection unit comprises a transparent convection-suppressing window arranged on a side of the absorber portion that faces toward the frontside, wherein the convection-suppressing window forms a closed compartment in the concentrator portion between the frontside and the absorber portion.

The window may be made of glass or polymer. In particular, the window comprises an at-least-partially-transparent polymer film selected from the group including fluorinated ethylene propylene (FEP) and ethylene tetrafluoroethylene (ETFE).

In case the window is formed from glass, the glass may be selected from a glass with low iron for high transmissivity in the visible and near infrared spectral range. Optionally, the window may be coated with an antireflection layer.

The inclusion of a transparent convection-suppressing window arranged on the side of the absorber portion facing the frontside physically isolates the concentrator portion from external airflow. This arrangement reduces heat losses caused by convection within the concentrator portion, thereby improving the thermal efficiency of the solar thermal collector module. By enclosing the concentrator portion, the window also protects the reflective surfaces and absorber portion from environmental contaminants such as dust or moisture, which could otherwise degrade optical performance over time.

This embodiment allows for efficient suppression of heat losses due to convection.

The convection-suppressing window may be a single piece window that forms the compartment for more than one or all concentrator portions.

Alternatively, the convection-suppressing window, is formed as a separate piece for each concentrator portion.

According to another embodiment of the invention, each collection unit comprises a plurality of transparent convection-suppressing windows that are arranged such that in each concentrator portion a plurality of closed compartments are formed between the frontside and the absorber portion, particularly wherein the compartments are formed on top of each other from the absorber portion toward the frontside.

The arrangement of a plurality of transparent convection-suppressing windows within each collection unit, forming multiple closed compartments between the frontside and the absorber portion, reduces heat loss due to convection. By segmenting the concentrator portion into multiple enclosed compartments, the design minimizes air circulation within the concentrator portion, thereby enhancing thermal insulation. This configuration ensures that the heat generated at the absorber portion is retained more effectively, improving the overall thermal efficiency of the solar thermal collector module.

The windows may be made from the same or differing materials, as elaborated in the context of the previous embodiment.

In this embodiment, the windows may be made into strips - particularly in the case of a trough geometry of the concentrator portions of the solar thermal collector - and suitably affixed to the reflective surfaces of the concentrator elements.

For this purpose, the concentrator elements may comprise small recesses into which the window may be inserted for affixing the window to the contractor element.

The windows may be formed by membrane sheets or foils. Alternatively, the windows may be formed from a rigid material such as a transparent polymer plate or glass.

According to another embodiment of the invention, the absorber portion fluidically separates the backside aperture of each collection unit with respect to the heat transfer portion.

This configuration prevents a direct interaction of the heat transfer medium with the concentrator portion, thereby reducing thermal losses caused by convective airflows between the concentrator portion and the heat transfer portion.

Additionally, this separation simplifies the structural design by allowing the absorber portion to serve as both a thermal interface and a physical barrier, reducing the need for additional sealing and heat transfer components and enhancing the durability of the system.

According to another embodiment of the invention, the concentrator elements of each collection unit comprise a substrate comprising a substrate material onto which the reflective surface is arranged, particularly wherein the substrate comprises a foam-like material.

The reflective surface may be arranged on the substrate by way of coating a reflective material on the substrate, or by forming, particularly by conforming or by molding a reflective material onto the substrate.

The reflective material may be a reflective film. Reflection in the context of the current specification is particularly understood as substantially specular reflection.

Using a foam-like material as the substrate provides a lightweight and thermally insulating structure, reducing heat losses through conduction while maintaining structural integrity. This choice of material enables facile manufacturing processes, such as wire-cutting or molding, and enables cost-effective production of the concentrator elements without compromising their optical or thermal performance.

A foam-like material is advantageous, in cases in which the contractor portion, with regard to the substrate, and the back portion, may be formed in a single piece.

In one embodiment, the substrate material of the concentrator elements is composed of a rigid polyisocyanurate (PIR) foam material, which provides both structural support and thermal insulation.

In another embodiment, the substrate is formed from phenolic foam material, which offers enhanced fire resistance and thermal stability,

In yet another embodiment, the substrate is constructed from extruded polystyrene (XPS) foam material, which is lightweight and cost-effective.

Alternatively, the substrate may be made from a molded composite material, such as fiberglass-reinforced polymer. In a further embodiment, the substrate is fabricated as a monolithic structure that integrates the concentrator elements and the back portion. The reflective surface may be applied to the substrate using a metallized polymer film, such as aluminized PET, which may be adhered to the substrate using a high-temperature adhesive or mechanical fasteners or clips, or may be coupled by mechanical means.

Alternatively, the reflective surface may be an aluminum film.

Alternatively, the reflective surface, for example, being deposited directly onto the substrate via a physical vapor deposition (PVD) process to ensure a uniform and durable coating.

These variations allow for adaptability in material selection and manufacturing techniques, enabling the solar thermal collector to be optimized for different performance, cost, and environmental requirements.

According to another embodiment of the invention, the back portion of each collection unit comprises the substrate material, particularly wherein the back portion of each collection unit consists of the substrate material.

The back portion of each collection unit being composed of, or consisting of, the same substrate material as the concentrator elements ensures a seamless integration between the structural and functional components of the solar thermal collector. This arrangement simplifies the manufacturing process by reducing the number of distinct materials required, thereby minimizing assembly complexity and potential material mismatches. Additionally, the use of a uniform substrate material enhances thermal insulation properties, as the back portion and concentrator elements can be optimized together to suppress heat losses. This configuration also improves the mechanical stability of the collector, as the uniform material distribution reduces stress points and ensures consistent structural integrity across the collection unit.

According to another embodiment of the invention, each collection unit comprises a first concentrator element and a second concentrator element arranged opposite of each other, wherein for a first collection unit of the collection units and a second collection unit of the collection units that are arranged adjacent to each other, the second concentrator element of the first collection unit and the adjacently located first concentrator element of the second collection unit form a reflective concentrator component.

The first and the second concentrator elements are comprised by the group of the two or more concentrator elements.

The first and the second concentrator elements of a collection unit are arranged with the reflective surfaces facing each other.

The arrangement of the first and second concentrator elements in each collection unit, with their reflective surfaces facing each other, ensures that incident solar radiation is effectively funneled and concentrated onto the absorber portion. By having the second concentrator element of the first collection unit and the first concentrator element of the second collection unit form a reflective concentrator component, the design minimizes gaps or interruptions in the reflective surfaces between adjacent collection units. This configuration enhances the optical efficiency of the solar thermal collector by reducing light losses at the boundaries between collection units, ensuring a continuous concentration of solar radiation onto the absorber portions.

Additionally, this arrangement simplifies the structural integration of adjacent collection units, as the shared reflective concentrator component reduces the need for separate reflective elements for each unit. This not only reduces material usage but also improves the mechanical stability and alignment of the concentrator elements, ensuring consistent optical performance across the entire collector module.

This later advantage is elaborated in the following embodiment in detail.

According to another embodiment of the invention, the substrate of the first and the second concentrator elements comprised by the concentrator component is monolithically formed.

According to another embodiment of the invention, the reflective surfaces of the first and the second concentrator element comprised by the concentrator component are formed monolithically, that is the reflective surfaces of the first and the second concentrator element of the concentrator component may be formed continuously, i.e. in one piece.

The term 'monolithically formed' may be understood in the context of the current specification, for example, to mean made of one piece, and/or formed integrally.

The monolithic formation of the substrate and/or the reflective surfaces for the first and second concentrator elements ensures structural integrity and eliminates the need for additional assembly steps or mechanical fasteners between the concentrator elements.

Additionally, a monolithic construction of one or more components simplifies the manufacturing process by reducing the number of separate components and assembly steps, which can lower production costs and improve reliability. The unified formation of the substrate and reflective surfaces also reduces the likelihood of thermal expansion mismatches or mechanical stresses between components, thereby increasing the durability and lifespan of the solar thermal collector module under varying environmental conditions.

According to another embodiment of the invention, the substrate of all concentrator elements of the solar thermal collector module is monolithically formed.

According to another embodiment of the invention, the substrate of the concentrator substrate is monolithically formed with the substrate material of the back portion, particularly of the back portion of the first and the second collection units.

By forming the substrate of the concentrator elements and the back portion as a monolithic structure, the manufacturing process is simplified even more than in the previous embodiment, thereby reducing the need for assembly steps such as bonding or joining separate components and improving the structural integrity and thermal insulation of the collector module.

According to another embodiment of the invention, the concentrator portion comprises a trough geometry formed as an extruded cross-section of the concentrator elements. That is, the trough geometry is formed by extruding a cross-section of the concentrator elements.

The term "extruded" and/or "extruding" in the context of the current specification particularly refers to a geometric meaning of a three-dimensional shape with a substantially constant cross-section, and not necessarily to the means of manufacturing such a shape. For example, an extruded geometry could be fashioned by a manufacturing method other than extrusion, such as wire cutting or molding.

Particularly, said trough geometry may be described as follows. The solar thermal collector module may extend along a principal plane comprising a first and a second direction, wherein the solar thermal collector module further extends along a third direction orthogonally to the principal plane, particularly wherein the third direction points from the backside to the frontside. Based on this definition of directions and the principal plane, the concentrator elements of each collection unit form an elongated trough along the first direction, wherein the through has a tapering cross-section.

That is, the tapering occurs from the frontside toward the backside.

The elongated trough geometry along the first direction enables effective light capture and concentration, improving the thermal energy collection efficiency. The tapering cross-section, narrowing from the frontside toward the backside, enhances the concentration of light onto the absorber portion, increasing the energy density of solar radiation in particular a solar flux intensity directed to the absorber. This configuration also supports the incorporation of the concentrator elements into a compact module, making the module appropriate for fixed-position installations without requiring complex tracking systems.

Additionally, the alignment of the concentrator elements along the principal plane and the orthogonal third direction ensures that the module can be oriented to maximize solar energy capture based on the installation site's latitude and solar path.

The exact geometry and shape of the trough may depend on the latitude at which the solar thermal collection module is intended to be located.

According to another embodiment of the invention, the concentrator elements of each collection unit are composed of sub-elements that are arranged on top of each other forming a stack protruding from the absorber portion to the frontside.

The sub-elements may be formed from separate pieces of the substrate material to form the substrate of the concentrator element, wherein the reflective surface of each concentrator element, particularly of each collection unit may be formed continuous, in a monolithic fashion.

This embodiment allows for two advantageous variations of the invention. According to a first variation, the reflective surface is continuous for each concentrator element, particularly extending over the sub-elements, wherein - as a result of the continuous reflective surface - the convection-suppressing window(s) are formed in pieces for each concentrator portion.

According to a second variation, the reflective surface is formed by discontinuous patches for each concentrator element, e.g. in strips, wherein each patch is affixed to a sub-element, particularly a single sub-element, wherein the convection-suppressing window(s) may be formed as a monolithic sheet across multiple concentrator portions.

According to another embodiment of the invention, each sub-element comprises a surface, particularly a planar surface, facing toward the reflective surface of the concentrator element or forming the reflective surface of the concentrator element, particularly wherein a gradient of said surface is greater than the gradient of said surface of the adjacent sub-element arranged closer to the absorber portion.

This embodiment allows for a simplified manufacturing process, as it may rely on non-curved surfaces.

In particular, the gradient may point toward the absorber portion. Similarly, the gradient of a concentrator element may point toward the absorber portion.

The gradient may be understood as the direction of the steepest descent.

According to another embodiment of the invention, each transparent convection-suppressing window separates each sub-element of each collection unit.

This embodiment is a variation of the embodiment that introduced convection-suppressing windows. This embodiment now allows using continuous windows that may extend over a plurality of collection units by extending (laterally) through the sub-elements into one or more adjacent collection units.

According to another embodiment of the invention, the heat transfer portion comprises one or more heat transfer medium channels that extend along the absorber portion of each collection unit, particularly along the trough of the collection unit.

This embodiment simplifies the manufacturing process by integrating the channel structure directly into the back portion. This eliminates the need for additional components or separate assembly steps for creating the channels, reducing material usage and production complexity. Furthermore, the integration of the channels into the back portion enhances thermal insulation by minimizing thermal bridges, thereby reducing heat losses from the heat transfer medium to the surroundings. This arrangement also ensures a compact and robust structure, improving the mechanical stability of the solar thermal collector module.

The one or more channels may comprise a channel wall that is formed in part by the absorber portion.

The heat transfer medium channel may be understood as a passage or a conduit within the module designed to facilitate the flow of a heat transfer medium, such as air, water, or other fluids, to transfer thermal energy from the absorber portion to the heat transfer medium which then transports the thermal energy to an outlet of the module. These channels are typically engineered to maximize heat exchange efficiency by optimizing the contact surface area and flow dynamics of the medium.

According to another embodiment of the invention, the one or more heat transfer medium channels are enclosed by the absorber portion on a side of the channel facing toward the frontside. That is, a side of the absorber portion facing toward the back side forms a portion of the wall of the channel.

According to another embodiment of the invention, the heat transfer medium channels are at least partially formed by recesses in the back portion of one or more collection units.

This embodiment simplifies the manufacturing process by integrating the channel structure directly into the back portion. This eliminates the need for additional components or separate assembly steps for creating the channels, reducing material usage and production complexity. Furthermore, the integration of the channels into the back portion enhances thermal insulation by minimizing thermal bridges, thereby reducing heat losses from the heat transfer medium to the surroundings. This arrangement also ensures a compact and robust structure, improving the mechanical stability of the solar thermal collector module.

A heat transfer medium channel may be understood as a passage or a conduit within a system designed to facilitate the flow of a heat transfer medium, such as air, water, or other fluids, to transfer thermal energy between components. These channels are typically engineered to maximize heat exchange efficiency by optimizing the contact surface area and flow dynamics of the medium.

According to a second aspect of the invention, a method for manufacturing a solar thermal collector module according to the first aspect of the invention is disclosed, the method comprising the steps of:
- Wire-cutting a substrate material such as to monolithically form the back portions, the heat transfer portions and the substrate of the concentrator elements of the plurality of collection units,
- Arranging in each collection unit an absorber sheet forming the absorber portion that fluidically separates the heat transfer portion from the concentrator portion,
- Arranging a reflective layer on the concentrator elements,
- Optionally arranging the convection-suppressing windows,
- Optionally arranging a transparent encapsulation sheet arranged on a side of the absorber portion that faces toward the frontside, wherein the encapsulation sheet encloses the concentrator portion of each collection unit.

The manufacturing method according to the second aspect of the invention enables the efficient and precise production of a solar thermal collector module by combining multiple functional components into a single manufacturing process. By wire-cutting a substrate material to form the back portions, heat transfer portions, and concentrator element substrates of the collection units as a unified structure, the method reduces the need for separate assembly steps, thereby minimizing alignment errors and ensuring structural integrity. This approach also simplifies the production process, reduces material waste, and enhances the thermal and mechanical performance of the collector by eliminating potential thermal bridges or weak points at interfaces between separately manufactured components.

The arrangement of an absorber sheet in each collection unit to fluidically separate the heat transfer portion from the concentrator portion ensures that the heat transfer medium is effectively isolated from the optical components, preventing contamination or thermal losses and that a suitable absorber material may be selected.

The optional inclusion of a transparent encapsulation sheet enclosing the concentrator portion provides additional protection against environmental factors such as dust, moisture, precipitation, ultraviolet radiation, and mechanical damage, thereby extending the operational lifespan of the collector. This encapsulation also helps to suppress convective heat losses, further improving the thermal efficiency of the system.

The advantages of using convection-suppressing windows have been elaborated in previous embodiments.

It is noted that embodiments, technical effects, definitions, features and examples disclosed in the context of the first aspect of the invention may be applied to and be used in a similar or identical fashion to the invention according to the second aspect and vice versa.

Therefore, an embodiment disclosed in the context of the second aspect may be set forth with an embodiment, feature and/or a definition as disclosed in the context of the first aspect. Vice versa, embodiments, features and/or definitions disclosed in the context of the second aspect may be applied to set forth an embodiment disclosed in the context of the first aspect.

### Figures and examples

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.
Fig. 1 shows an exemplary embodiment of the solar thermal collector module;
Fig. 2 shows a first embodiment of the concentrator portion;
Fig. 3 shows a second embodiment of the concentrator portion;
Fig. 4 shows a third embodiment of the concentrator portion;
Fig. 5 shows another exemplary embodiment of the solar thermal collector module;
Fig. 6 shows different shapes of the concentrator element;
Fig. 7 shows a system with a solar thermal collector module;
Fig. 8 shows a top view of the solar thermal collector module; and
Fig. 9 shows a flow chart of the method for manufacturing the module.

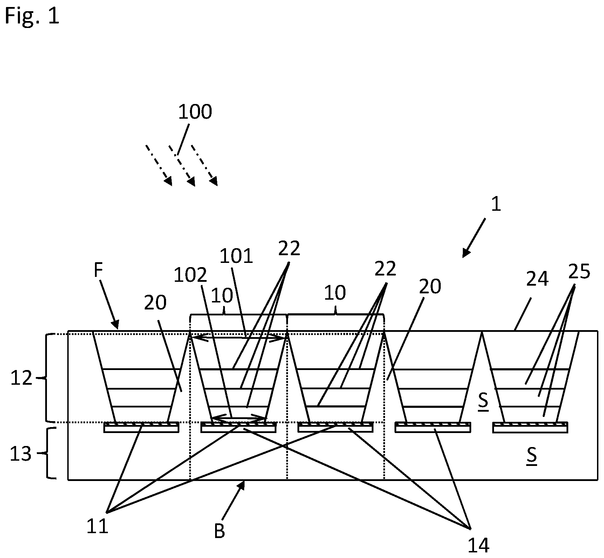

Fig. 1 illustrates a cross-sectional view of an embodiment of a solar thermal collector module 1, showcasing its structural and functional components designed to capture and convert incident light 100 into thermal energy for applications such as industrial process heat. The module 1 comprises a frontside F and a back side B, with the frontside F oriented toward the incident light 100 during operation. The term "toward" in this context serves for distinction between the orientation of the front side F and the back side B in relation to the incident light 100. The back side B faces away from the incident light, while the front F side may be oriented at a pointed angle to the incident light 100, and would still be considered to be oriented toward the incident light 100. The module 1 is configured for non-sun-tracking operation, meaning it remains stationary and does not require complex tracking mechanisms to follow the sun's movement. It may be fixedly mounted on a stable surface, such as a building rooftop, with an inclination relative to the horizontal plane to optimize solar energy capture based on the installation site's latitude.

The solar thermal collector module 1 includes multiple collection units 10 arranged adjacent to one another in an arrayed, particularly a periodic configuration. Each collection unit 10 is configured to capture and concentrate solar radiation 100, ensuring efficient energy conversion. The module 1 is further equipped with a transparent protective sheet 24 on the frontside F, which shields the internal components from environmental factors such as dust, moisture, precipitation, ultraviolet radiation, and mechanical damage. The protective sheet 24 is constructed from a material that allows the passage of incident light 100 with minimal optical losses, ensuring the optical performance of the module is maintained.

Each collection unit 10 comprises four primary components: an absorber portion 11, a concentrator portion 12, a back portion 13, and a heat transfer portion 14. These components are geometrically and functionally interrelated to achieve efficient light concentration and thermal energy transfer.

It is noted that this notion includes embodiments, where a plurality of collection units shares for example a common back portion and/or absorber portion.

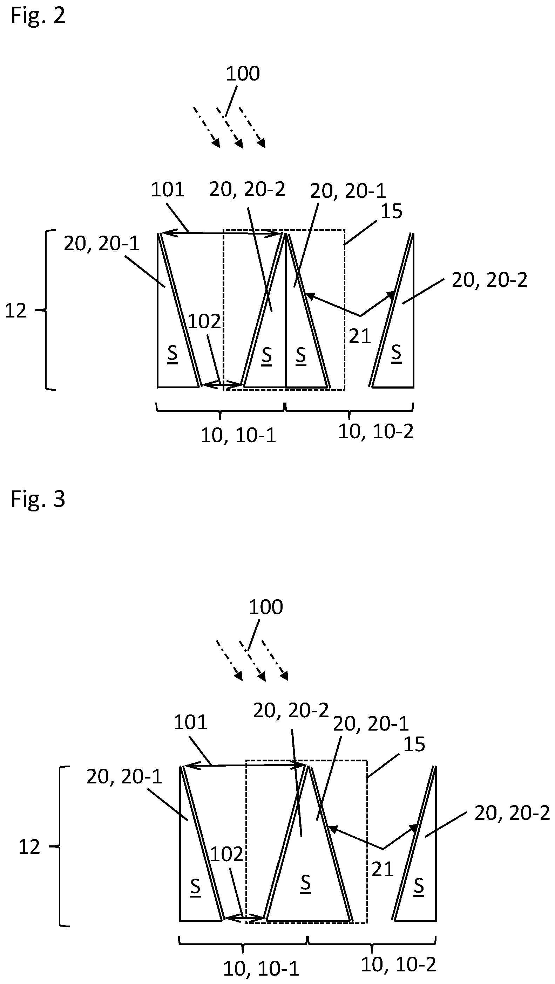

The concentrator portion 12 is located on the side of the absorber portion 11 facing the frontside F. It includes concentrator elements 20 that protrude outward from the absorber portion 11 toward the frontside F. These concentrator elements 20 form a funnel-shaped concentrator space between them and feature reflective surfaces 21 (cf. Fig. 2) designed to redirect and concentrate incident light 100 onto the absorber portion 11. The concentrator portion 12 defines a frontside aperture 101, which is larger than the backside aperture 102. This geometric configuration ensures that the incident light 100 entering through the frontside aperture 101 is effectively focused and concentrated onto the absorber portion 11 through the smaller backside aperture 102.

In this exemplary embodiment, the concentrator elements 20 are monolithically formed with the back portion 13, simplifying the manufacturing process and enhancing the structural integrity of the module. Additionally, adjacent concentrator elements 20 within each collection unit 10 are also monolithically formed, further reducing assembly complexity.

The concentrator portion 12 also comprises convection-suppressing windows 22, which are transparent elements, such as foils or transparent sheets, that form enclosed compartments 25 within the concentrator portion 12. These compartments 25 suppress natural convection, thereby reducing heat losses and improving thermal efficiency.

The absorber portion 11 is positioned beneath the concentrator portion 12 and is designed to absorb the concentrated solar radiation and convert it into thermal energy. Each collection unit 10 in the example of Fig. 1 features a separate absorber plate as its absorber portion 11 allowing for the monolithic design of the concentrator elements 20 with the back portion 13. The absorber portion 11 also serves as a fluidic barrier, separating the concentrator portion 12 from the heat transfer portion 14.

The absorber portion may comprise a metallic solar absorber plate, wherein a side facing toward the frontside may be coated by a spectrally selective film, which exhibits a high spectral absorptance, particularly 90% or higher at wavelengths for which the solar irradiance is relatively high, e.g. 0.5 µm, and a low spectral emittance at wavelengths for which the blackbody spectral emissive power at the absorber temperature is relatively high, e.g. 7 µm.

Alternatively, it is possible to define the absorber properties by means of a range for both solar and infrared regions. While the following numbers are approximate since the transition from the high spectral absorptance range to the low spectral emittance range is not always a sharp transition, typical ranges for selective solar absorber surfaces may be selected as follows:
The high absorptance range may extend from 0.3 to 2.5 µm, and the low emittance range may extend from 2.5 µm to 20 µm.

A transition point in the ranges above is based approximately on the point at which the absorptance and emittance are both equal to 0.5.

The heat transfer portion 14 is situated between the absorber portion 11 and the back portion 13. It facilitates the transport of thermal energy from the absorber portion 11 to a heat transfer medium, such as air, which flows through channels formed within or by the heat transfer portion 14. These channels guide the heat transfer medium from an entry point to an exit point of the module (not shown), ensuring effective thermal energy extraction. The heat transfer portion 14 is configured to maximize the contact area between the heat transfer medium and the absorber portion 11, enhancing the efficiency of heat transfer.

In a preferred embodiment, the heat transfer fluid (HTF) flowing through the heat transfer portion 14 may be air, which simplifies the design and avoids challenges such as condensation.

In an alternative embodiment, the HTF is liquid water, which flows through enclosed channels 14-1 of the heat transfer portion 14 positioned in close thermal proximity to the absorber portion 11 to facilitate efficient heat transfer. In another alternative embodiment, the HTF is water that undergoes a phase change from liquid to vapor as it flows through the heat transfer portion 14, referred to as a "boiling arrangement" in the context of the current specification.

In the boiling arrangement, the liquid water is conveyed through the heat transfer portion 14 by capillary action, utilizing a porous structure (not shown), such as a wick, placed in close thermal proximity to the absorber portion. The porous structure is configured to extend at least partially into the heat transfer portion 14, creating an open space between the absorber plate 14 and the back portion 13. This open space forms a flow channel 14-1 through which the generated water vapor can travel. The flow channel is positioned in close thermal proximity to the solar absorber plate 14, allowing additional heat to be transferred from the absorber plate to the water vapor, thereby generating superheated vapor. In particular, while not shown in Fig. 1, superheating would occur in the open space which results from the porous structure being shorter in the trough direction, than the absorber portion. In other words, a portion of the channel closer to the entry point is filled with the porous structure, and a portion of the channel closer to the exit point is open, or filled with a non-wicking or otherwise unsaturated porous medium. It is within this open space or otherwise filled region that the superheating may take place. The porous structure may extend beyond the heat transfer portion at the entry point into a water reservoir (not shown), which supplies water to the solar thermal collector module via capillary action.

In an alternative configuration of the boiling arrangement, a series of tubes (not shown) may be integrated within the heat transfer portion 14 to convey liquid water to the porous structure. This design provides an additional method for delivering water to the porous structure while maintaining efficient thermal contact with the solar absorber plate 14.

The back portion 13 is positioned on the side of the absorber portion 11 facing the back side B. It provides structural support to the collection unit 10 and functions as a thermal insulation layer to minimize heat losses from the heat transfer portion 14. In this embodiment, the back portions of all collection units 10 are formed monolithically as a single piece, further simplifying the manufacturing process and improving the structural stability of the module.

During operation, incident light 100 enters the module 1 through the frontside apertures 101 of the concentrator portion 12. The reflective surfaces 21 (cf Fig. 2) of the concentrator elements 20 direct and concentrate the light 100 onto the absorber portions 11. The smaller backside apertures 102 facilitate a concentrating effect, increasing the energy density of light as it reaches the absorber portions 11, where it is absorbed and converted into thermal energy. The thermal energy is then transferred to the heat transfer medium via the heat transfer portion 14, which guides the medium through the module for energy extraction.

The solar thermal collector module 1 is capable of generating low to medium temperature heat in the range of 100 °C to 150 °C. For example, the module may achieve a power output of 640 W or a daily total energy output of 3.1532 kWh. The ability to achieve these temperatures using, for example, air as the heat transfer medium underscores the effectiveness of the module's optical and thermal design. Unlike conventional designs, such as flat-panel collectors that lack the concentrating portion or evacuated tube collectors with more complex and costly designs or concentrating collectors with sun-tracking, this solar thermal collector module 1 delivers comparable thermal performance at a significantly lower cost.

Fig. 2 provides a detailed view of two adjacent collection units (more precisely a portion thereof, detailing the concentrator portion 12), specifically a first collection unit 10-1 and a second collection unit 10-2, as part of the solar thermal collector module 1. This figure highlights the structure and arrangement of the concentrator portion 12 and the formation of the concentrator component 15 (indicated by the dotted box), which is shared between the two adjacent collection units 10. The concentrator portion 12 is designed to capture and concentrate incident light 100, ensuring efficient energy transfer to the absorber portion 11.

The concentrator portion 12 of the first and the second collection unit 10-1, 10-2 includes concentrator elements 20.

The concentrator elements 20 are arranged in pairs within each collection unit 10, 10-1, 10-2, with a first concentrator element 20-1 and a second concentrator element 20-2 positioned opposite each other, such that the reflective surfaces 21 face each other. The concentrator component 15 (outlined by the broken-line box) is formed by the second concentrator element 20-2 of the first collection unit 10-1 and the first concentrator element 20-1 of the adjacent second collection unit 10-2. This shared arrangement allows for a continuous reflective structure and a monolithic design.

Each concentrator element 20 comprises a substrate S and a reflective surface 21. The substrate may be a foam-like material onto which the reflective surface may be conformed. The geometric shape of the reflective surface 21 and thus the substrate S is optimized to ensure light concentration and collection. The geometric shape of the reflective surface 21 and thus the substrate S, may be shaped to in a way that is specific for the latitude of the intended location of operation, and/or that is specific for an intended number of operating hours per day on a given day of the year or range of days of the year.

The concentrator elements 20 are composed of a substrate material that provides structural integrity and durability. The substrate material is selected for its resistance to environmental factors such as temperature fluctuations and mechanical stress. In this embodiment, the substrates of the concentrator elements are separate entities, wherein for example in Fig. 3 the concentrator elements of a contractor component 15 are made of a monolithic substrate S. Additionally, the reflective surfaces 21 of the first and second concentrator elements 20-1 and 20-2 may be monolithically integrated.

Typically, the concentrator elements 20 are arranged to form a trough geometry, achieved by geometrically extruding a cross-section of the concentrator elements 20 along a longitudinal direction. This trough geometry narrows from the frontside F toward the backside B, ensuring that the concentrator elements 20 effectively channel incident light 100 toward the absorber portion 11. This design promotes the concentration ratio and thermal efficiency of the solar thermal collector module 1.

The reflective surface 21 is typically formed by applying a reflective coating onto the substrate of the concentrator elements 20. This coating may be a metallized layer, such as aluminum or silver, which provides high reflectivity and durability. The reflective surface 21 may also include additional protective layers to enhance resistance to environmental factors, such as oxidation, abrasion, and UV degradation.

In embodiments where the substrate of the concentrator elements 20-1 and 20-2 is monolithically formed, the reflective surface 21 may also be monolithically integrated with the substrate. This integration ensures a seamless and continuous reflective surface, which improves the optical performance of the concentrator component 15 and reduces manufacturing complexity. The reflective surface 21 is arranged to form a tapering cross-section along the trough geometry of the concentrator elements 20, further enhancing the concentration of incident light 100 onto the absorber portion 11.

Fig. 3 depicts a variation of the embodiment shown in Fig. 2, with the difference that the contractor elements 20 comprised by the concentrator component, are formed monolithic. Advantages and technical effects of this variant have been elaborated previously.

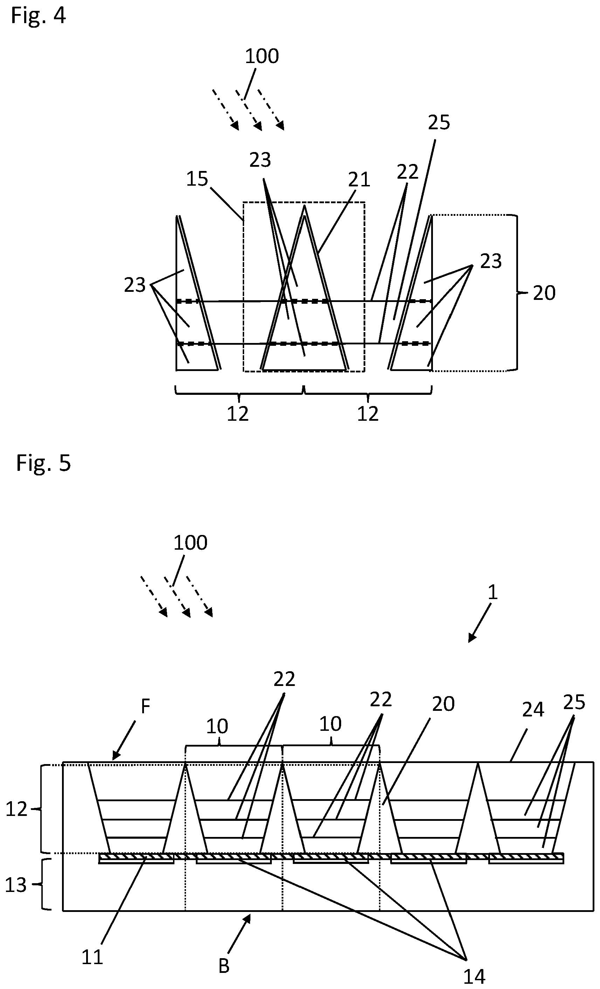

In Fig. 4, a variant of the invention is depicted in detail in the concentrator portion. Here, each concentrator element 20 is divided into several - in this example three - sub-elements 23. The sub-elements are stacked on top of each other, forming the concentrator element 20. The sub-elements comprise interfaces (depicted as broken lines) between which the convection-suppressing windows 22 are arranged. That is, the windows 22 of adjacent concentrator portions extend through the concentrator elements 20 into the neighboring concentrator portion. This allows using a single window 22, e.g. foil, to be placed on the interface of the sub-element and then stacking the next sub-element into it, which provides advantageous manufacturing streamlining. However, this embodiment is mutually exclusive of having continuous reflective surfaces 21 for each concentrator element 20. Therefore, in this embodiment, it may be advantageous that each sub-element is coated with the reflective surface 21 independently before assembling to a concentrator element.

Independent of the specific design of the concentrator portion and the solar thermal collector module, the following selection of materials may be advantageous.

The substrate of the concentrator elements / concentrator components may comprise or consist of polyisocyanurate (PIR) foam, a lightweight and rigid thermal insulation material. PIR foam may be chosen for its low thermal conductivity, which minimizes heat losses, and its structural integrity, which supports the reflective surfaces 21 without significant deformation. Alternatively, the substrate may be made from phenolic foam, which offers enhanced fire resistance and thermal stability, making it suitable for high-temperature applications. Both materials are widely available and cost-effective, aligning with the low-cost manufacturing strategy of the solar thermal collector module 1.

The reflective surfaces of the concentrator elements may be formed by applying a reflective material, such as aluminized PET film or a thin aluminum sheet, onto the selected surfaces of the concentrator elements. Alternatively, a reflective material is adhered to the substrate using a high-temperature adhesive, ensuring a durable bond that withstands environmental conditions. Alternatively, the reflective surface is deposited directly onto the substrate using a physical vapor deposition (PVD) process, which creates a uniform and highly reflective coating. This approach eliminates the need for adhesives.

Fig. 5 shows a cross-sectional view of an exemplary embodiment of the module 1 of the invention, wherein, here, in contrast to the embodiment of Fig. 1, the absorber portion is a continuous monolithic absorber plate that extends over several collection units. This embodiment may be piece-wise or layer-wise assembled, wherein the concentrator portions 10 may be arranged on top of the absorber plate, once the absorber plate has been arranged on the heat-transfer portion 14. The back portion may comprise pillar-like, protruding structures, that may serve as pillars onto which the absorber plate may be arranged, wherein once the absorber plate is arranged on the pillars, the space between the pillars and the absorber plate is the heat-transfer portion.

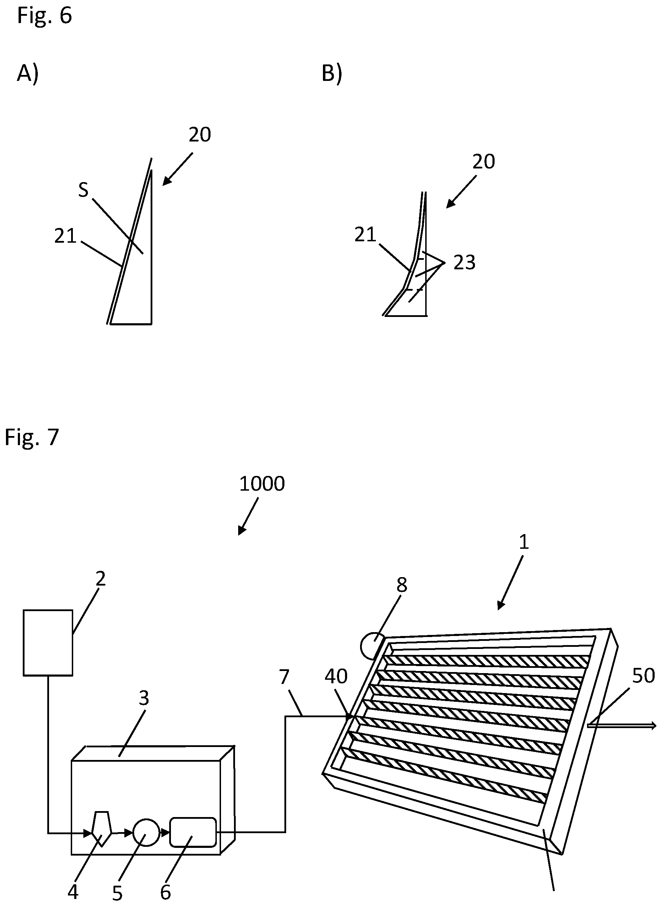

Fig. 6 shows various embodiments of shapes of the concentrator elements 20. In Fig. 6A, the cross-section of the concentrator element 20 is in essence triangular, and has non-curved flat reflective surface. In Fig. 6B the concentrator element 20 has a curved reflective surface 21 arranged on the substrate S allowing for an improved focusing characteristic.

The essentially parabolic surface in Fig. 6B may be piecewise linear formed by sub-elements that each have an even, i.e. non-curved reflective surface.

In Fig. 7 a system 1000 comprising a solar thermal collector module 1 is shown schematically. The system 1000 comprises the solar thermal collector module 1, an air source 2, and a controller device 3.

The air source 2 is connected to the controller device 3 to provide air to the collector module. The controller device 3 comprises an air filter 4 configured to filter the compressed air that is connected at an entry port of the controller device 3 to the filter 4. The air filter 4 is connected to a pressure controller 5, and further to a mass flow controller 6 configured to adjust and control a mass flow provided to the solar thermal collector module 1. The filtered and adjusted airflow is provided to the solar thermal collector module 1 via a tubing 7. The temperature of the air provided to the solar thermal collector module 1 may be measured at the entry point 40 of the module 1 with a temperature sensor (not shown). At the module 1, a pyranometer 8 is located for measuring the solar irradiation. The air is then guided through the heat transfer portion of the solar thermal collector 1, where the air is heated. At the exit point 50, another temperature sensor (not shown) is arranged to measure the temperature of the heated air.

The measured temperature of the temperature sensors as well as the data from the pyranometer 8 may be transmitted to a computer (not shown) and evaluated by the computer. The computer in turn is connected and configured to control the control device 3, for example, for adjusting the airflow.

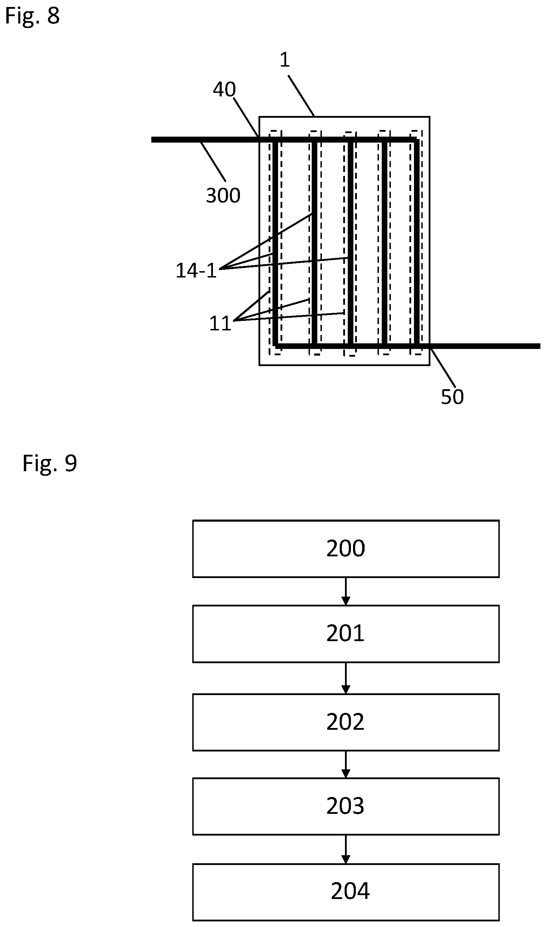

Fig. 8 shows a cross-sectional view of the module highlighting the heat transfer portion 14 and the absorber portion 11 (dashed box) that are overlaid.

Heat transfer fluid 300, such as air, or a liquid such as water, may be provided to the module 1 at the entry point 50 to the channels 14-1 of the heat transfer portion(s) that are aligned with the absorber portions 11 of the collection units. The heat transfer medium 300 flows along the channels 14-1 to be heated and exits the module at the exit point 50 of the module form where it may be provided to industrial processes.

In Fig. 9, an exemplary manufacturing process for the module according to the invention is shown as a flow diagram.

The manufacturing process for the module and in particular the concentrator elements is designed to be efficient and scalable. According to the invention, the concentrator elements as well as the back portion comprising recesses to form the heat transfer portion may be fabricated from pre-formed PIR or phenolic foam boards using a computer numerical control (CNC) abrasive wire-cutting process 200. This method allows for precise shaping of the wedges to achieve the desired funnel-like geometry of the troughs. The CNC process ensures that the dimensions and angles of the concentrator elements are consistent, which is critical for maintaining the optical performance of the concentrator portion 12. In one embodiment, the concentrator elements are cut into separate segments, i.e. sub-elements, such as bottom, middle, and top pieces, which are then assembled to form the complete concentrator element. This segmented approach allows for the integration of transparent convection-suppressing windows 22 between the segments, creating enclosed compartments 25 that reduce heat losses due to convection.

In another embodiment, the concentrator elements are fabricated as a monolithic structure, integrating the bottom, middle, and top segments into a single piece together with the back portion and the heat transfer portions 14. The absorber portion(s) 11 may then be assembled 201 to enclose the heat transfer portions 14. The reflective material is applied 202 after cutting 200 the substrate S to the monolithic concentrator elements 20 using a folding technique, where a single sheet of reflective film is folded around the concentrator elements 20 and affixed at the edges. This method ensures a continuous and smooth reflective surface, further enhancing the light-concentrating capability of the concentrator portion 12. The convection-suppressing windows 22 may be assembled 203 once the reflective surface 21 is affixed to the concentrator elements 20 and the absorber portion(s) 11 is/are attached to the heat transfer portions 14. Finally, the protective sheet 24 or window may be added to close 204 the solar thermal collector module 1 on the frontside F.

It is noted that affixing the reflective surface 21 and attaching the absorber portion(s) 11 may be interchangeable in terms of the sequence of assembly.

The use of PIR or phenolic foam as the substrate material for the concentrator elements 20 and the back portion contributes to the overall thermal efficiency of the solar thermal collector module 1. These materials provide excellent thermal insulation, reducing heat losses from the concentrator portion 12 to the surrounding environment. Additionally, their lightweight nature reduces the overall weight of the module, making it easier to transport and install.

### Reference numerals

- 1: solar thermal collector module
- 2: air source
- 3: controller device
- 4: air filter
- 5: pressure controller
- 6: mass flow controller
- 7: tubing
- 8: pyranometer
- 10: collection unit
- 10-1: first collection unit
- 10-2: second collection unit
- 11: absorber portion
- 12: concentrator portion
- 13: back portion
- 14: heat transfer portion
- 14-1: channels
- 15: concentrator component
- 20: concentrator element
- 20-1: first concentrator element
- 20-2: second concentrator element
- 21: reflective surface
- 22: convection suppressing window
- 23: sub-element
- 24: protective sheet/ window

- 25: compartment
- 40: entry point
- 50: exit point
- B: backside
- F: frontside
- S: substrate
- 100: incident light
- 101: frontside aperture
- 102: backside aperture
- 200: wire-cutting the substrate
- 201: arranging the absorber portion
- 202: affixing the reflective surface
- 203: attaching the convection suppressing windows
- 204: enclosing the module on the frontside
- 1000: system

## Claims

1. A solar thermal collector module (1) comprising a frontside (F) and a backside (B) opposite the frontside, wherein the solar thermal collector module (1) comprises collection units (10) arranged next to each other, wherein each collection unit (10) comprises the following components:
- An absorber portion (11),
- A concentrator portion (12) arranged on a side of the absorber portion (11) that faces to the frontside (F),
- A back portion (13) arranged on a side of the absorber portion (11) facing to the backside (B),
- A heat transfer portion (14) for transporting a heat transfer medium, wherein the heat transfer portion (14) is arranged between the absorber portion (11) and the back portion (B),
**characterized in that** the concentrator portion (12) comprises two or more concentrator elements (20), wherein the two or more concentrator elements (20) protrude from the absorber portion (11) toward the frontside (F), wherein each concentrator element (20) comprises a reflective surface (21) that is shaped to reflect incident light (100) from the frontside (F) toward the absorber portion (11).

2. The solar thermal collector module of claim 1, wherein for each collection unit (10) the concentrator elements (20) form a frontside aperture (101) on a side facing the frontside (F), and a backside aperture (102) on a side facing the absorber portion (11), wherein the backside apertures (102) are smaller than the frontside apertures (101).

3. The solar thermal collector module of claim 1 or 2, wherein each collection unit (10) comprises a transparent convection-suppressing window (22) arranged on a side of the absorber portion (11) that faces toward the frontside (F), wherein the convection-suppressing window (22) forms a closed compartment (25) in the concentrator portion (12) between the frontside (F) and the absorber portion (11).

4. The solar thermal collector module (1) according to claim 3, wherein each collection unit (10) comprises a plurality of transparent convection-suppressing windows (22) that are arranged to form in each concentrator portion (12) a plurality of closed compartments (25) between the frontside (F) and the absorber portion (11), particularly wherein the compartments (25) are formed on top of each other from the absorber portion (11) toward the frontside (F).

5. The solar thermal collector module (1) according to one of the preceding claims, wherein the absorber portion (11) fluidically separates the backside aperture (102) of each collection unit (10) with respect to the heat transfer portion (14).

6. The solar thermal collector module (1) of the preceding claims, wherein the concentrator elements (20) comprise a substrate (S) comprising a substrate material onto which the reflective surface (21) is arranged.

7. The solar thermal collector module according to claim 6, wherein the back portion (13) comprises the substrate material.

8. The solar thermal collector module according to one of the preceding claims, wherein each collection unit (10) comprises a first concentrator element (20-1) and a second concentrator element (20-2) arranged opposite of each other, wherein for a first collection unit (10-1) and a second collection unit (10-2) that are arranged adjacent to each other, the second concentrator element (20-2) of the first collection unit (10-1) and the first concentrator element (20-1) of the second collection unit (20-2) form a reflective concentrator component (15).

9. The solar thermal collector module according to claims 6, wherein the substrate (S) of the concentrator component (15) is monolithically formed with the substrate material of the back portion (13).

10. The solar thermal collector module (1) according to one of the preceding claims, wherein the concentrator portion (12) comprises a trough geometry formed as an extruded cross-section of the concentrator elements (20).

11. The solar thermal collector module (1) according to one of the preceding claims, wherein the concentrator elements (20) of each collection unit (10) are composed of sub-elements (23) that are arranged on top of each other forming a stack protruding from the absorber portion (11) to the frontside (F).

12. The solar thermal collector module (1) according to claim 4 and 11, wherein each transparent convection-suppressing window (22) separates the sub-elements (23) of each collection unit (10).

13. The solar thermal collector module (1) according to one of the preceding claims, wherein the heat transfer portion (14) comprises one or more heat transfer medium channels (14-1) that extend along the absorber portion (11) of each collection unit (10), particularly along the trough of the collection unit.

14. The solar thermal collector module (1) according to claim 13, wherein the one or more heat transfer medium channels (14-1) are enclosed by the absorber portion (11) on a side of the channels facing toward the frontside (F).

15. A method for manufacturing a solar thermal collector module (1) of one of the preceding claims, comprising the steps of:
- Wire-cutting (200) a substrate material such as to monolithically form the back portions (13), the heat transfer portions (14) and the substrate (S) of the concentrator elements (20) of the plurality of collection units (10),
- Arranging (201) in each collection unit (10) an absorber sheet forming the absorber portion (11) that fluidically separates the heat transfer portion (14) from the concentrator portion (12),
- Arranging a reflective layer (21) on the concentrator elements (20).
